# EUROPÄISCHE PATENTSCHRIFT

(11) **EP 2 497 702 B1**
(45) Veröffentlichungstag und Bekanntmachung des Hinweises auf die Patenterteilung: **08.10.2014**
(21) Anmeldenummer: 12159043.4
(22) Anmeldetag: 12.03.2012
(51) Int. Cl.: B62H 3/02, B62H 5/00, B62M 6/80

(54) **Fahrrad und Halterung**
Bicycle and fixture
Vélo et fixation

(30) Priorität: 10.03.2011 AT 3272011
(43) Veröffentlichungstag der Anmeldung: 12.09.2012
(73) Patentinhaber: Sycube Informationstechnologie GmbH, 1030 Wien (AT)
(72) Erfinder: Kirschenhofer, Gerhard, 8241 Dechantskirchen (AT); Rödlach, Michael, 1230 Wien (AT)
(74) Vertreter: Babeluk, Michael

(56) Entgegenhaltungen:
- EP-A2- 2 112 307
- WO-A1-2010/058127
- WO-A1-2010/106238
- GB-A- 2 045 707
- JP-A- 2005 080 490
- RO-A1- 102 236
- US-A1- 2002 195 796

## Beschreibung

Die Erfindung betrifft ein Fahrrad mit einem Rahmen, einem Lenker und mit einer Kupplung, die zur Befestigung und Verriegelung an einer festen Halterung ausgebildet ist gemäß dem Oberbegriff von Patentanspruch 1.

Fahrräder werden in Verleihstationen oder dgl. üblicherweise nicht durch Fahrradschlösser gesichert, sondern durch eine am Fahrrad angebrachte Kupplung in einer entsprechend ausgebildeten Halterung festgelegt. Die Halterung ist dabei in der Regel mit Verriegelungselementen versehen, die von berechtigten Benutzern gelöst werden können, damit dieser das Fahrrad entnehmen kann. Die Verbindung zwischen Verriegelungselement und Halterung ist dabei weitgehend starr, d.h. dass das Fahrrad in einer vorbestimmten Stellung festgelegt ist. Der damit verbundene Nachteil ist, dass sämtliche Kräfte, die auf das abgestellte Fahrrad einwirken, von diesem aufgenommen werden müssen. Daher ist es möglich, dass bereits relativ bescheidene Kräfte, die entfernt vom Befestigungspunkt auf das Fahrrad ausgeübt werden, zu großen Momenten am Befestigungspunkt führen. Daher kommt es relativ leicht zu Beschädigungen.

Um diese Gefahr zu verringern sind die Kupplungen vielfach im mittleren Bereich des Fahrrads, beispielsweise am Unterrohr angeordnet, um den möglichen Hebealarm zu verkleinern. Dies ist aus der Sicht des Benutzers suboptimal, wird aber aus den obigen Gründen in Kauf genommen.

Aus der WO 2009/129623 A ist eine Kupplung bekannt, die ein Gelenk aufweist, so dass eine beschränkte Beweglichkeit des Fahrrades gegenüber der Halterung möglich ist. Dabei ist es jedoch problematisch, dass es grundsätzlich am Ende des Bewegungsbereichs einen Anschlag gibt, an den das Fahrrad bei einer entsprechend großen Bewegung anschlägt, wobei dann wiederum die Gefahr einer Beschädigung auftritt. Da die Bewegung vor dem Anschlag ohne nennenswerten Widerstand erfolgt, ist die Beschädigungsgefahr sogar größer als bei der zuvor beschriebenen Lösung. Außerdem wird durch eine solche Kupplung im Normalfall nicht die bestimmungsgemäße Lage der Fahrräder gewährleistet, was den Betrieb beeinträchtigt, wenn mehrere Halterungen in relativ geringem Abstand nebeneinander angeordnet sind, wie dies bei Verleihstationen üblicherweise der Fall ist.

Aus der GB 2 455 551 A ist eine Kupplung mit ähnlichen Nachteilen bekannt. Darüber hinaus zeigt die DE 295 06 166 U eine Kugelverbindung zum Anschieben von Fahrrädern, die jedoch nicht dazu geeignet ist, ein Fahrrad an einer feststehenden Struktur sicher zu festzulegen.

Die RO 102 236 A zeigt eine Kupplung für einen Fahrradanhänger mit elastischen Eigenschaften.

Die WO 2010/106238 A offenbart eine Halterung für Fahrrad mit einer Sicherung gegen unbefugte Entnahme.

Die WO 2010/058127 A1, die als nächstliegender Stand der Technik angesehen wird, zeigt ein Fahrrad mit Kupplung und eine Halterung.

Aufgabe der Erfindung ist es, diese Nachteile zu vermeiden und eine Lösung anzugeben, die eine deutlich verringerte Anfälligkeit gegen Beschädigungen aufweist, auch wenn missbräuchliche Eingriffe vorliegen.

Erfindungsgemäß ist gemäß Patentanspruch 1 vorgesehen, dass die Kupplung als teilweise sphärisch geformter Eingriffskörper ausgebildet ist, der federnd am Rahmen oder am Lenker befestigt ist.

Wesentlich an der Erfindung ist, dass im Normalbetrieb durch die Feder die gewünschte Lage der Fahrräder festgelegt wird. Einwirkenden Kräften wird ein federnder Widerstand entgegengesetzt, der das Fahrrad in Richtung der Normallage vorspannt und der mit steigender Auslenkung zunimmt. Dadurch kann die Gefahr von Beschädigungen deutlich verringert werden, wenn eine unsachgemäße Manipulation vorgenommen wird. Dabei ist die Befestigung der Kupplung am Rahmen vorzuziehen, da so die Lage des Fahrrads unabhängig von der Lenkerstellung ist.

Besonders vorteilhaft ist es, wenn der Eingriffskörper in einem vorderen Bereich des Fahrrades, vorzugsweise oberhalb eines Vorderrades angebracht ist. Dadurch kann das Abstellen und Entnehmen eines Fahrrads einfach und benutzerfreundlich gestaltet werden und dennoch eine hohe Toleranz gegen Beschädigungen erreicht werden.

Eine besonders begünstigte Ausführungsvariante der Erfindung sieht vor, dass die Kupplung, d.h. der Eingriffskörper über eine Schraubenfeder befestigt ist. Diese Lösung ist einfach und setzt einer Verdrehung des Fahrrads gegenüber der Halterung in allen Richtungen einen progressiv ansteigenden Widerstand in der Form eines Rückstellmoments entgegen.

Erfindungsgemäß ist auch vorgesehen, dass der Eingriffskörper mindestens eine Abflachung aufweist. Dadurch kann die Drehbeweglichkeit des Eingriffskörpers in der Verriegelungsstellung gezielt begrenzt werden. Auf diese Weise wird erreicht, dass nur die Sollstellung des Fahrrads in Bezug auf die Halterung momentenfrei ist. Jede Auslenkung darüber hinaus ist nur mehr über die Verformung der Feder möglich.

Das Fahrrad kann insbesondere als Elektrofahrrad ausgebildet sein. In diesem Fall ist besonders bevorzugt vorgesehen, dass am Eingriffskörper, vorzugsweise seitlich einander gegenüberliegend, Kontakte zur Stromversorgung angebracht sind. Dadurch kann in der Verriegelungsstellung eine Aufladung der Stromquelle des Fahrrads erfolgen. Alternativ zur seitlichen Anordnung der Kontakte kann auch eine vordere Abflachung als ein Kontakt verwendet werden. Dies hat den Vorteil, dass auch bei einer starken Verdrehung des Fahrrads um seine Längsachse die Aufladung gewährleistet ist, sofern die Ladekontakte an der Halterung entsprechend groß ausgebildet sind.

In weiterer Folge betrifft die vorliegende Erfindung eine Halterung für mindestens ein Fahrrad der oben beschriebenen Art. Erfindungsgemäß ist für jedes Fahrrad eine Aufnahme für eine Kupplung vorgesehen, die als Pfanne mit Verriegelungselementen ausgebildet ist.

In einer ersten nicht beanspruchten Ausführungsvariante ist vorgesehen, dass die Aufnahme eine Bewegung des Eingriffskörpers mit mehreren Freiheitsgraden erlaubt. Dadurch wird der Bewegungsspielraum zusätzlich zu den Möglichkeiten der Verformung der Feder vergrößert, wobei der Bewegung des Eingriffskörpers auch gezielt vorbestimmte Reibungskräfte in der Pfanne entgegengesetzt werden können.

Alternativ sieht eine zweite und beanspruchte Ausführungsvariante vor, dass die Aufnahme eine Anlagefläche für eine Abflachung des Eingriffskörpers aufweist. Dadurch wird die Verdrehung des teilweise kugelförmigen Eingriffskörpers begrenzt oder ausgeschlossen, wenn dieser in der Pfanne verriegelt ist. Allerdings ermöglicht es die sphärische Ausformung des Eingriffskörpers, diesen in unterschiedlichen Winkeln in die Aufnahme einzuführen, ohne die sichere Verriegelung zu beeinträchtigen.

In der Folge wird die vorliegende Erfindung anhand der in den Figuren dargestellten Ausführungsvariante näher erläutert. Es zeigen:
- Fig. 1: schematisch ein Fahrrad mit einer erfindungsgemäßen Kupplung; und
- Fig. 2: die wesentlichen Bauteile von Kupplung und Halterung.

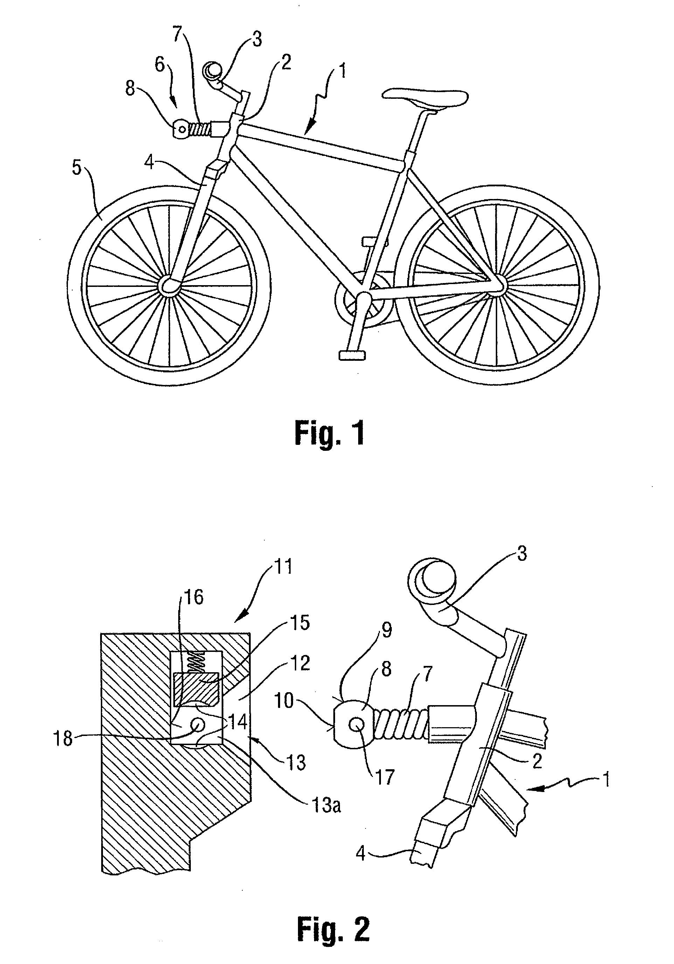

Das Fahrrad von Fig. 1 besitzt einen Rahmen 1 in herkömmlicher Diamant-Konfiguration, wobei allerdings auch jede andere Ausbildung, etwa als Damenrad möglich ist. Am Steuerrohr 2, das den Lenker 3 samt Gabel 4 und Vorderrad 5 lagert, ist eine Kupplung 6 angebracht. Die Kupplung 6 besteht aus einer Schraubenfeder 7, die an einem Ende fest am Steuerrohr 2 befestigt ist und an ihrem freien Ende einen Eingriffskörper 8 trägt.

Aus Fig. 2 ist der Aufbau der Kupplung detailliert ersichtlich. Der Eingriffskörper ist im wesentlichen kugelförmig, d.h. er besitzt eine sphärische Oberfläche 9, die den Großteil des Umfangs ausmacht. An der der Schraubenfeder gegenüberliegenden Seite ist jedoch eine Abflachung 10 vorgesehen.

Die allgemein mit 11 angedeutete Halterung besitzt eine sich nach außen erweiternde Einfuhröffnung 12 zum Einführen des Eingriffskörpers 8 in einen Aufnahmeraum 13a einer Aufnahme 13. Vertiefungen 14 dienen dazu, den Eingriffskörper 8 in einer Verriegelungsstellung sicher zu halten.

Ein Verriegelungselement 15 ist beweglich angeordnet und durch eine Feder 15 vorgespannt, um das Einführen des Eingriffskörpers 8 zu ermöglichen. Durch nicht dargestellte Riegel, die von einer ebenfalls nicht dargestellten Steuereinrichtung angesteuert werden, kann das Verriegelungselement 15 in einer Stellung arretiert werden, in der das Herausziehen des Eingriffskörpers 8 verhindert wird, so dass das Fahrrad gegen unbefugte Entnahme gesichert ist. Eine Anlagefläche 16 stützt in der Verriegelungsstellung die Abflachung 10 ab, so dass der Eingriffskörper 8 unverdrehbar festgelegt ist.

Seitlich am Eingriffskörper 8 ist ein Kontakt 17 zur Stromversorgung angebracht, der zum Aufladen der Batterie des Fahrrads dient. An der Halterung 11 ist ein entsprechender Ladekontakt 18 vorgesehen. Der zweite Kontakt kann nicht sichtbar gegenüberliegend angeordnet sein, aber auch an der Abflachung 10 ausgebildet sein, wobei dann der entsprechende Ladekontakt an der Anschlagfläche 16 liegt.

Die vorliegende Erfindung ermöglicht es, ein Fahrrad sicher an einer Halterung 11 anzubringen und gegen unbefugte Entnahme zu schützen.

## Patentansprüche

1. Fahrrad mit einem Rahmen (1), einem Lenker (3) und mit einer Kupplung, die zur Befestigung und Verriegelung an einer festen Halterung (11) ausgebildet ist, um es gegen unbefugte Entnahme zu schützen, **dadurch gekennzeichnet, dass** die Kupplung als teilweise sphärisch geformter Eingriffskörper (8) ausgebildet ist, der federnd am Rahmen (1) oder am Lenker (3) befestigt ist und der mindestens eine Abflachung (10) aufweist, so dass nur die Sollstellung des Fahrrads in Bezug auf die Halterung momentenfrei ist.

2. Fahrrad nach Anspruch 1, **dadurch gekennzeichnet, dass** die Kupplung in einem vorderen Bereich des Fahrrades, vorzugsweise oberhalb eines Vorderrades (5) angebracht ist.

3. Fahrrad nach Anspruch 1, **dadurch gekennzeichnet, dass** die Kupplung an einem Steuerrohr (2) angebracht ist.

4. Fahrrad nach einem der Ansprüche 1 bis 3, **dadurch gekennzeichnet, dass** der Eingriffskörper (8) über eine Schraubenfeder (7) befestigt ist.

5. Fahrrad nach einem der Ansprüche 1 bis 4, **dadurch gekennzeichnet, dass** am Eingriffskörper (8), vorzugsweise seitlich einander gegenüberliegend, Kontakte (17) zur Stromversorgung angebracht sind.

6. Halterung für mindestens ein Fahrrad nach einem der Patentansprüche 1 bis 5, wobei eine Aufnahme (13) für den Eingriffskörper (8) vorgesehen ist, die als Pfanne mit mindestens einem Verriegelungselement (15) ausgebildet ist,
**dadurch gekennzeichnet, dass** die Aufnahme (13) eine Anlagefläche (16) für die Abflachung (10) des Eingriffskörpers (8) aufweist.

7. Halterung nach Anspruch 6, **dadurch gekennzeichnet, dass** die Aufnahme (13) Ladekontakte (18) zur Übertragung von elektrischer Energie aufweist.

## Claims

1. A bicycle, comprising a frame (1), a handlebar (3) and a coupling which is formed for fixing and locking on a fixed retainer (11) in order to protect it from unauthorized removal, **characterised in that** the coupling is formed as a partially spherically shaped engaging body (8) attached resiliently to the frame (1) or the handlebar (3) and comprises at least one flattened portion (10), so that only the target position of the bicycle with respect to the retainer is torque-free.

2. A bicycle according to claim 1, **characterised in that** the coupling is attached to a front region of the bicycle, preferably above a front wheel (5).

3. A bicycle according to claim 1, **characterised in that** the coupling is attached to a head tube (2).

4. A bicycle according to one of the claims 1 to 3, **characterised in that** the engaging body (8) is fixed by way of a coil spring (7).

5. A bicycle according to one of the claims 1 to 4, **characterised in that** contacts (17) for power supply are attached to the engaging body (8), preferably laterally opposite of each other.

6. A retainer for at least one bicycle according to one of the claims 1 to 5, wherein a receptacle (13) is provided for the engaging body (8), which is arranged as a socket with at least one locking element (15), **characterised in that** the receptacle (13) comprises a contact surface (16) for the flattened portion (10) of the engaging body (8).

7. A retainer according to claim 6, **characterised in that** the receptacle (13) comprises charging contacts (18) for transmitting electrical power.

## Revendications

1. Vélo comportant un cadre (1), un guidon (3) et un dispositif d'accouplement pour être fixé et verrouillé à une attache solide (11) et protéger le vélo contre le vol,
**caractérisé en ce que**
le dispositif d'accouplement est constitué par un organe d'attache (8) au moins en partie de forme sphérique, fixé par un ressort au cadre (1) ou au guidon (3) et qui comporte au moins une partie aplatie (10) de façon que seule la position de consigne du vélo sera sans couple par rapport à l'attache.

2. Vélo selon la revendication 1,
**caractérisé en ce que**
le dispositif d'accouplement est installé dans la région avant du vélo, de préférence au-dessus de la roue avant (5).

3. Vélo selon la revendication 1,
**caractérisé en ce que**
le dispositif d'accouplement est fixé au tube de direction (2).

4. Vélo selon l'une des revendications 1 à 3,
**caractérisé en ce que**
l'organe d'attache (8) est fixé par l'intermédiaire d'un ressort hélicoïdal (7).

5. Vélo selon l'une des revendications 1 à 4,
**caractérisé en ce que**
l'organe d'attache (8) comporte des contacts d'alimentation électrique (17) prévus de préférence latéralement et de façon opposée.

6. Fixation pour au moins un vélo selon l'une des revendications 1 à 5 avec un moyen de réception (13) pour l'organe d'attache (8), ce moyen étant en forme de coupelle avec au moins un élément de verrouillage (15),
**caractérisée en ce que**
le moyen de réception (13) comporte une surface d'appui (16) pour recevoir la partie aplatie (10) de l'organe d'attache (8).

7. Fixation selon la revendication 6,
**caractérisée en ce que**
le moyen de réception (13) comporte des contacts de charge (18) pour transmettre de l'énergie électrique.
